# EUROPEAN PATENT SPECIFICATION

(11) **EP 4 418 972 B1**
(45) Date of publication and mention of the grant of the patent: **15.01.2025**
(21) Application number: 23810412.9
(22) Date of filing: 28.11.2023
(51) Int. Cl.: A47L 11/18, A47L 13/20

(54) **LIFTING APPARATUS FOR CLEANING ASSEMBLY, CLEANING ASSEMBLY, AND CLEANER**
HEBEVORRICHTUNG FÜR REINIGUNGSANORDNUNG, REINIGUNGSANORDNUNG UND REINIGER
APPAREIL DE LEVAGE POUR ENSEMBLE DE NETTOYAGE, ENSEMBLE DE NETTOYAGE ET DISPOSITIF DE NETTOYAGE

(30) Priority: 07.12.2022 CN 202211567678; 07.12.2022 CN 202223287313 U; 08.02.2023 EP 23155669
(43) Date of publication of application: 28.08.2024
(73) Proprietor: Versuni Holding B.V., 5656 AE Eindhoven (NL)
(72) Inventor: WANG, Jian, 5656 AE Eindhoven (NL); LI, Lavin, 5656 AE Eindhoven (NL)
(74) Representative: Vollering, Stefanus Franciscus Maria
(86) International application number: PCT/EP2023/083359
(87) International publication number: WO 2024/120893

(56) References cited:
- CN-A- 112 842 174
- CN-A- 114 129 089
- US-A1- 2022 378 267

## Description

### FIELD

Embodiments of the present invention generally relate to the field of household appliances, and more specifically, to a lifting apparatus for a cleaning assembly, a cleaning assembly, and a cleaner.

### BACKGROUND

A cleaner such as a sweeping robot typically has two operating modes (i.e., a sweeping mode and a mopping mode) when cleaning the floor. For the sweeping and mopping modules, different cleaning assemblies are used. Specifically, the sweeping cleaning assembly may include a cleaning brush or rubber roller, and the mopping cleaning assembly may include a planar structure or roller structure with a mop. In general, it is required to lift the mopping module in the sweeping-only mode and lift the sweeping module in the mopping-only mode, to improve the cleaning effect in a single mode. As such, how to attain a compact lifting apparatus occupying a small space within the cleaner is a challenge to designers.

US 2022/0378267 A1 discloses an automated cleaning robot according to the preamble of independent claim 1, which includes a robot body capable of realizing automatic walking and a mop mechanism provided at a rear end of the robot body. The mop mechanism includes a mount support rotatably connected to the robot body, a rotation component received in and rotatably connected to the mount support, a crawlertype wiping cloth sleeving outside the rotation component, and a lifting mechanism being in transmission connection with the mount support, for driving a rear end of the mount support to ascend or descend relative to a front end of the mount support.

CN112842174A relates to a lifting structure which is used for driving a mop structure to ascend and descend relative to a robot body. The lifting structure comprises: a base which is provided with a pull rod used for being connected with the mop structure; a transmission screw rod arranged on the base, wherein the transmission screw rod and the base move synchronously; and a lifting driving part and a transmission wheel assembly, wherein the transmission wheel assembly is connected with the lifting driving part and the transmission screw rod, the lifting driving part drives the transmission screw rod to move through the transmission wheel assembly, so that the transmission screw rod drives the base to move, a pull rod on the base is connected with the mop cloth structure to drive the mop structure to ascend and descend relative to the robot body. A robot comprises the robot body, the mop structure and the lifting structure.

CN114129089A discloses a sweeping robot, which is characterized in that a motor and a side brush are mounted on a first lifting device and a second lifting device at the front end of a casing. First and second stacks of cloth boxes are mirror-mounted on the housing. A pressure plate lifting device and a monitoring lifting device are arranged between the first and the second cloth stacking boxes. The camera is mounted on the monitoring lifting device. A wide rolling plate which exceeds the width of the casing is arranged under the lifting device of the pressing plate. One end of the strip cloth exceeding the width of the shell is arranged in the first cloth stacking box, and the other end of the strip cloth bypasses the wide rolling plate and is arranged in the second cloth stacking box. Therefore, the ground can be cleaned through the side brush and the ultra-wide strip cloth can be continuously moved forwards to be replaced with new ones for large-area mopping without dead angles, and the ground can be cleaned. Simultaneously, the sweeping robot can automatically go to the sweeping robot base station to complete charging and cleaning after sweeping the ground, so that the cleaning efficiency is greatly improved.

### SUMMARY

Embodiments of the present invention provide a lifting apparatus for a cleaner, so as to solve the problem of the lifting apparatus for the cleaner existing in the prior art.

Embodiments of the present invention relate to a lifting apparatus for a cleaning assembly adapted to be mounted in the cleaning assembly, comprising: a motor comprising an output shaft; a roller coupled to the output shaft and configured, with rotation of the output shaft, to rotate about an axis of the output shaft along a first rotation direction or a second rotation direction, the first rotation direction being opposite to the second rotation direction; further comprising: a boss fixedly disposed on an end on a side adjacent to the roller and away from the output shaft, and configured to lift the roller when the roller rotates along the first rotation direction.

According to embodiments of the present invention, the motor is used to drive the roller to rotate along the first rotation direction so that the roller abuts against and rolls on the boss, for example, fixed onto a housing of the cleaner, thereby causing the roller to be lifted with the boss as a support as an effect of the interaction of the roller and boss. In the way, a simple structure is attained, and fewer parts are involved. Therefore, the lifting apparatus occupies a small structural space of the cleaner, has a higher reliability, and incurs a low cost.

In some embodiments, the roller comprises: a side end surface located at the end; and a flange disposed on the side end surface and configured to abut against a boss surface of the boss when the roller rotates along the first rotation direction. In those embodiments, the roller can abut against the boss surface by means of a flange extending out of the side surface, thereby causing the roller to move.

In some embodiments, the flange is configured to be spaced apart from or in direct contact with the boss in an axial direction parallel to the axis when the roller rotates along the second rotation direction at an operating position of the cleaning assembly. In those embodiments, in a circumstance where the flange rotates with the roller along the second rotation direction, a cleaning operation is performed for a surface to be cleaned when the roller rotates along the second rotation direction at the operating position; at this time, no movement is required, and by spacing apart the flange and the boss, the roller can be maintained at the operating position. Relatively, the flange does not rotate with the roller along the second rotation direction.

In some embodiments, the flange is further configured to move towards the boss along the axial direction when the roller rotates along the first rotation direction at the operating position spaced apart from the boss, to abut against the boss surface. The flange is also configured to move away from the boss along the axial direction when the roller rotates along the second rotation direction at a receiving position. In those embodiments, when switched from the operating mode to the receiving mode, the flange can move from the position spaced apart from the boss towards the boss so that the roller can operate independently in each mode. When switched from the receiving mode to the operating mode, the flange moves away from the boss, not abutting against the boss surface of the boss, so that the roller can move to the operating position.

In some embodiments, an end surface of the flange facing the boss comprises a contact surface and a guide surface, the contact surface being parallel to the side end surface and the guide surface extending from the contact surface to the side end surface along the second rotation direction. In those embodiments, when the flange moves towards the boss, the contact surface of the flange contacts the end surface of the boss, the flange then continues to rotate to cause the boss to contact the guide surface, and guided by the guide surface, the boss moves smoothly to the end surface, to avoid the impact of the boss on the end side surface.

In some embodiments, the contact surface and the guide surface are arc-shaped about the axis, a width of the guide surface in a radial direction is tapered from the contact surface to the side end surface, and a width of an end portion of the guide surface away from the contact surface in the radial direction is flared along the second rotation direction. In those embodiments, the contact surface and the guide surface are entirely of an arc shape, and its outer peripheral surface is a cylindrical surface accordingly, to enable smooth rolling on the boss surface.

In some embodiments, a plurality of flanges are disposed on the side end surface, which are equidistant in the first rotation direction. In those embodiments, since the rotation position of the roller during the switching mode is uncertain, the relative positions of the flanges and the boss are not fixed. In this way, the flange closest to the boss in the plurality of flanges can abut against the boss surface of the boss as fast as possible to implement rapid switching.

In some embodiments, the roller comprises a receiving cavity extending along an axial direction parallel to the axis, where the motor is disposed in the receiving cavity. In those embodiments, by arranging the motor within the roller, the space of the lifting apparatus can be further reduced.

In some embodiments, a guide slot is opened on an inner wall of the receiving cavity, which extends along a direction inclined relative to the axial direction and comprises a first limit part at an end of the guide slot and a second limit part at the other end, and wherein the receiving cavity receives therein a rotary pin coupled to the output shaft, the rotary pin comprises a pin shaft disposed on an outer peripheral surface thereof, and the rotary shaft extends into the guide slot.

In those embodiments, the guide slot extends on the inner wall from an end proximal to the motor along an inclined direction away from the motor. For example, the first limit part is disposed on an end of the guide slot proximal to the motor, and the second limit part is disposed on the other end. The rotary pin rotates with the output shaft along the first rotation direction and the second rotation direction opposite thereto, and simultaneously drives the pin shaft located within the guide slot to rotate. When the pin shaft abuts against the second limit part and rotates along the second rotation direction, the pin shaft is fixed relative to the roller, and drives the roller to rotate along the second rotation direction. At this time, the roller and the flange thereon are spaced apart from the boss, and the roller is located at the operating position and performs the cleaning operation. When the motor rotates reversely and drives the rotary pin to rotate along the first rotation direction, the pin shaft does not abut against the second limit part, nor does it drive the roller to rotate. As the action of the pin shaft and the guide slot, the roller moves towards the boss so that the pin shaft moves towards the first limit part relative to the guide slot, and finally abuts against the first limit part. At this time, the pin shaft continues to rotate and drives the roller to rotate along the first rotation direction, so that the roller moves towards the receiving position as the action of the flange and the boss. In the way, with the arrangement of the pin shaft of the rotary pin and the guide slot, predetermined actions of the roller can be implemented.

In some embodiments, the flange is further configured to rotate with the roller when the roller rotates along the first rotation direction, and directly contact the boss and remain stationary when the roller rotates along the second rotation direction. In those embodiments, by enabling the flange to remain stationary when the roller rotates along the second rotation direction (e.g. the cleaning assembly performs the cleaning operation), the operation of the cleaning assembly can maintain stable.

In some embodiments, the roller further comprises: a transmission part extending from the side end surface to an interior of the roller along an axial direction parallel to the axis; and a one-way bearing comprising an inner ring and an outer ring, the inner ring fixedly coupled to an outer periphery of the transmission part, the outer ring fixedly coupled to the roller, the inner ring and the outer ring configured to lock each other when the roller rotates along the first rotation direction, and to slide relative to each other when the roller rotates along the second rotation direction. In those embodiments, a one-way bearing is disposed between the roller and the flange as the transmission part so that the roller and the flange rotate together only in a direction, to attain a predetermined lifting mechanism.

In some embodiments, the roller cleans a surface to be cleaned, and a speed of rotation along the second rotation direction is greater than a speed of rotation along the first rotation speed. In those embodiments, the roller includes, for example, a cleaning component disposed on its periphery, to clean the surface to be cleaned.

In some embodiments, the motor is configured to stop rotating in response to determining the roller moves to the receiving position of the cleaning assembly. In those embodiments, after the roller moves to the receiving position, the motor stops rotating, causing the roller not to rotate but stably stay at the receiving position.

In some embodiments, the motor is coupled to a position sensor disposed on the end side adjacent to the roller, and the motor is further configured to receive a position signal from a position sensor and determine the position of the roller based on the position signal. In those embodiments, the motor can be controlled based on the position of the roller, so as to more accurately control the movement of the roller.

In a second aspect of the present invention, there is provided a cleaning assembly. The cleaning assembly is adapted to be mounted on a body of a cleaner and configured to move between an operating position of abutting against a surface to be cleaned relative to the body and a receiving position away from the surface to be cleaned, and the cleaning assembly comprises the lifting apparatus according to the first aspect of the present invention.

In a third aspect of the present invention, there is provided a cleaner. The cleaner is adapted to operate on a surface to be cleaned and comprises: a body comprising a boss; and the cleaning assembly of the second aspect of the present invention adapted to be mounted on the body so that a side end surface of a lifting apparatus of the cleaning assembly is adjacent to the boss. It would be appreciated that the description and advantages of the first aspect of the present invention are also applicable to the cleaning assembly of the second aspect and the cleaner of the third aspect of the present invention.

In some embodiments, the body comprises a receiving cavity for a lifting apparatus, which is opened towards the surface to be cleaned. In those embodiments, by arranging the lifting apparatus within the receiving cavity opened towards the surface to be cleaned, the space occupied by the lifting apparatus can be reduced, and the entire volume of the cleaner can be decreased accordingly.

In some embodiments, the receiving cavity comprises a first sidewall and a second sidewall, where the first sidewall is proximal to the side end surface of the lifting apparatus, the second sidewall is opposite to the first sidewall in the axial direction, and the second sidewall is provided thereon with a position sensor for detecting a position of the roller. In those embodiments, by arranging a position sensor at the sidewall of the receiving cavity of the roller, the position of the roller can be determined efficiently.

### BRIEF DESCRIPTION OF THE DRAWINGS

The above and other objectives, features, and advantages of the present invention will become more apparent through the following detailed description of the embodiments of the present invention with reference to the accompanying drawings. In the drawings, multiple embodiments of the present invention will be illustrated in an exemplary way, without limitation, where:
Figs. 1A-1B are partial sectional views of a cleaner according to example embodiments of the present invention;
Figs. 2A-2B are schematic views of an interior of a cleaner according to example embodiments of the present invention;
Fig. 3 is a schematic exploded view of a lifting apparatus according to example embodiments of the present invention;
Fig. 4 is a schematic diagram of a rotary pin according to example embodiments of the present invention;
Fig. 5 is a schematic diagram of a roller according to some embodiments of the present invention;
Fig. 6 is a sectional view of a roller without a rotary pin received therein according to some embodiments of the present invention;
Figs. 7A-7B are sectional views of different view angles when a rotary pin is located at a first limiting part according to some embodiments of the present invention ;
Figs. 8A-8B are sectional views from different view angles when a rotary pin is located at a second limiting part according to some embodiments of the present invention;
Fig. 9 is a schematic view of a flange according to example embodiments of the present invention;
Figs. 10A-10C are schematic diagrams of a positional relation between a flange and a boss during a movement of a roller towards a storage position according to some embodiments of the present invention;
Fig. 11 is a schematic diagram of a roller according to some other example embodiments of the present invention;
Fig. 12 is a sectional view of a roller according to some other example embodiments of the present invention.

### DETAILED DESCRIPTION OF EMBODIMENTS

Reference will now be made to the various example embodiments shown in the drawings to illustrate the principle of the present invention. It would be appreciated that the description on those embodiments are provided merely to enable those skilled in the art to better understand and further carry out the present invention, without suggesting any limitation to the scope of the present invention. It is worth nothing that similar or same reference symbols are used in the drawings if possible, and they are used to denote the similar or same functions. Those skilled in the art could easily realize that the alternative embodiments of the structure and method illustrated in the following description could be employed without departing from the principle of the present invention described here.

Conventionally, when some cleaners such as sweeping robots are switched between a sweeping mode and a mopping mode, it is required to manually replace their assemblies by a user, causing much inconvenience to the user. In some other cleaners, an additional motor is provided for controlling lifting of a cleaning assembly, so as to implement switching between different operating modes. In addition, the conventional lifting mechanism occupies a large structural space as having the additional motor. Besides, the conventional lifting mechanism, for example, ropes for lifting, screws, and the like, typically has two motion trajectories, namely active rising and falling, and rising or falling of the lifting mechanism drives the cleaning assembly up or down. This indicates that a large activity space should be spared within the cleaner, which is not conductive to overall spatial structure design of the cleaner and increases the cost and the system control complexity. The above-mentioned disadvantages are more apparent for lifting of a long-shaft cleaning assembly such as a roller or a rolling brush.

To this end, the present invention provides a lifting apparatus for a cleaning assembly so as to at least partly solve the problem of the lifting apparatus existing in the prior art. The lifting apparatus according to embodiments of the present invention shares the drive mechanism of the rolling brush as the power source, and can move the roller of the lifting apparatus from the operating position to the receiving position in a passively lifting fashion, with the aid of the interaction between the flange on the flange of the roller end side of the lifting apparatus and the boss on the body. No extra parts are required in the lifting mechanism, making it possible to attain a compact structure while reducing the cost.

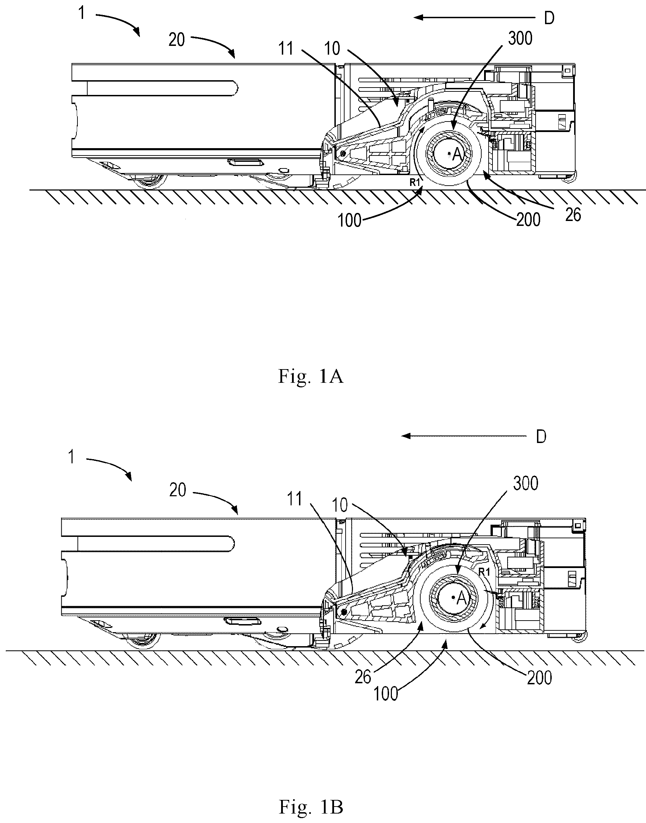

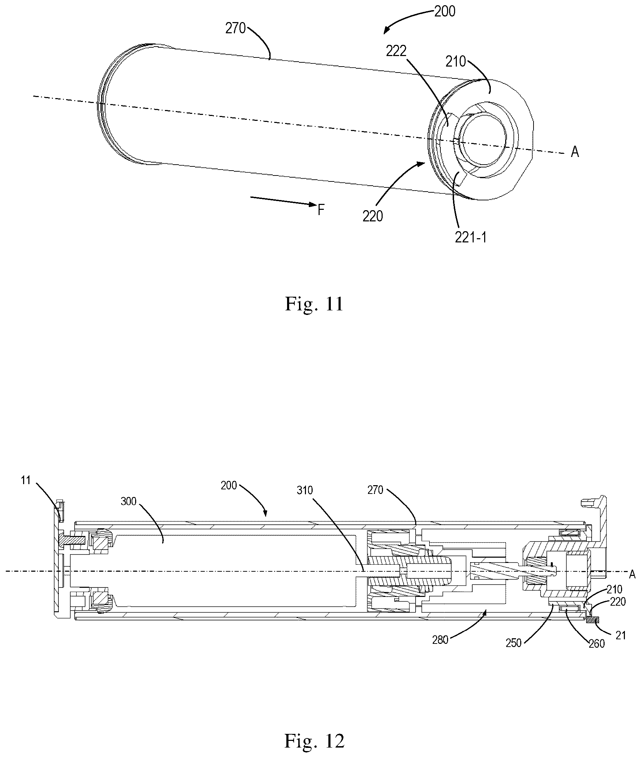

Hereinafter, reference will be made to Figs. 1A and 12 to describe the structure and the work principle of the lifting apparatus and the cleaner according to some example embodiments of the present invention.

Fig. 1A is a partial sectional view of a cleaner according to example embodiments of the present invention. As shown therein, the cleaner 1 can move along a direction D on a surface to be cleaned and perform a cleaning operation. The cleaner 1 includes a cleaning assembly 10 for performing the cleaning operation, which is mounted on a body of the cleaner 1. The body 20 includes a receiving cavity 26 opened towards the ground. The cleaning assembly 10 is mounted within the receiving cavity 26 and movable relative to the body 20 between an operating position abutting against a surface to be cleaned and a receiving position (i.e., within the receiving cavity 26) away from the surface to be cleaned. The cleaning assembly 10 includes a bracket 11 mounted on the body 20. The bracket 11 has a lifting apparatus 100 mounted thereon. A roller 200 of the lifting apparatus 100 is rotatably provided on the bracket 11. The lifting apparatus 100 further includes a motor 300 extending along an axis A. The roller 200 is sheathed onto the motor 300 and can be driven by the motor 300 to rotate about the axis A extending along a direction parallel to the ground. As shown in Fig. 1A, since the cleaner 1 is switched to the operating mode, the roller 200 in the lifting apparatus 100 rotates along a first rotation direction R1 and starts to be lifted to move away from the surface to be cleaned. In the embodiment as shown, the roller 200 as a part of the lifting apparatus 100 drives the cleaning assembly 10 to move, and is simultaneously sheathed onto a cleaning component, for example, for mopping or sweeping, to perform the cleaning operation. It would be appreciated that the roller 200 may also be a component specifically for lifting, not for the cleaning operation.

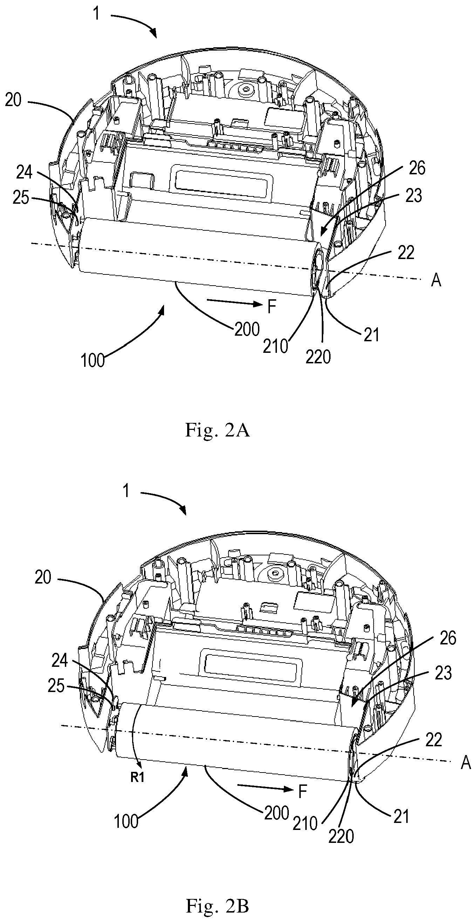

Fig. 1B is a partial sectional view of the cleaner 1 according to example embodiments of the present invention. The roller 200 is lifted to the receiving position as an effect of the interaction between the flange of the roller 200 and the boss of the body 20 to be fully received within the receiving cavity 26. Therefore, the roller 200 does not affect other operating modes of the cleaner 1, nor does it hinder the cleaner 1 from moving on the ground. Hereinafter, reference will be made to Figs. 2A-2B to introduce the lifting apparatus 100 from the perspective of the interior of the cleaner 1.

Fig. 2A is a schematic view of the interior of the cleaner 1 when the cleaning assembly 10 is at the operating position. As shown therein, the cleaning assembly 10 is at the operating position and is at least partly located in the receiving cavity 26 along the roller extending along an axial direction parallel to the axis A. In order to implement the lifting function of the cleaning assembly 10, a flange 220 is disposed on an end side surface 210 of the roller 200 in an axial direction F, on one hand. The flange 220 extends outwards from the end surface 210 along the axial direction F. On the other end, a boss 21 is disposed on a first sidewall 23 of the body 20 proximal to the end surface 210 in the receiving cavity 26. In addition, the receiving cavity 26 further includes a sidewall 24 opposing the first sidewall 23 in the axial direction F. On the sidewall 24 is also disposed a position sensor 25 for detecting a position of the roller 200.

As shown in Fig. 2A, when the cleaning assembly 10 is located at the operating position, the flange 220 is spaced apart a certain distance from the boss 21 in the axial direction F. In the switching mode, the roller 200 has to move towards the first sidewall 23 so that the flange 220 abuts against a boss surface 22 of the boss 21 facing the receiving position.

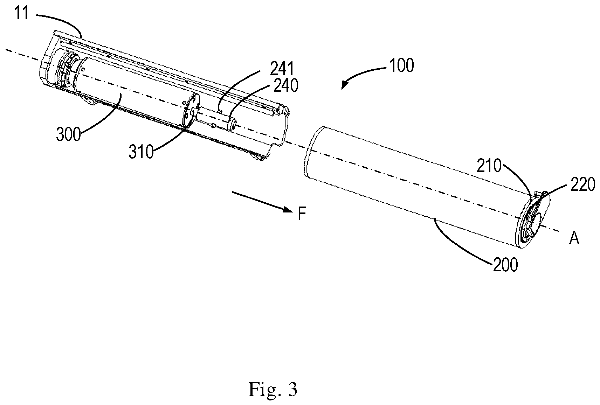

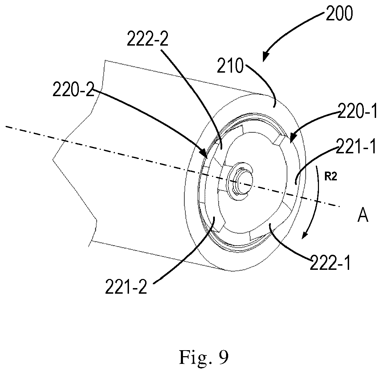

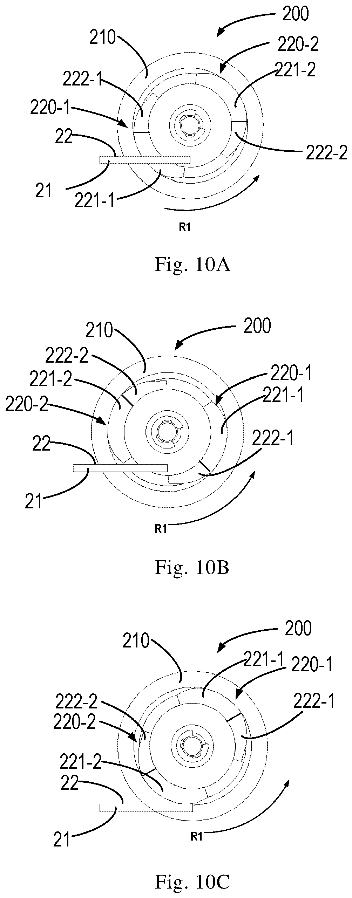

Fig 2B is a view of the interior of the cleaner 1 when the flange 220 abuts against the boss 21. As shown in Fig. 2B, the roller 200 moves in the axial direction F so that the flange 220 abuts against the boss surface 22 of the boss 21. Subsequently, the roller 200 rotates about the axis A along a first rotation direction, and as the outer peripheral surface of the flange rolls on the boss surface 22, the roller 200 is lifted and moved towards the receiving position. In other words, the movement of the roller 200 from the operating position to the receiving position includes two stages. In the first stage, the roller 200 is driven to rotate along the first rotation direction, and such rotation results in movement along the axial direction F to cause the flange 220 to abut against the boss 21. In the second stage, the roller 200 is driven to continue to rotate along the first rotation direction, and is lifted and moved towards the receiving position as an effect of the interaction between the flange 220 and the boss 21. Hereinafter, reference will be made to Figs. 3 through 8B to describe in detail the structure of the lifting apparatus 100 and the structural principle of the movement in the first stage, and reference will be made to Figs. 9 and 10C to describe in detail the principle of the lifting movement of the lifting apparatus 100 in the second stage

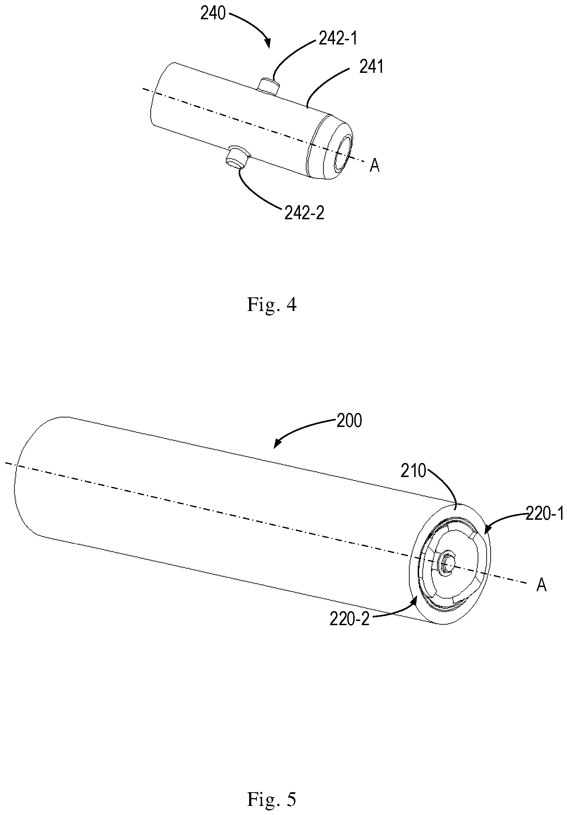

Fig. 3 is an exploded view of the lifting apparatus 100 according to example embodiments of the invention. As shown therein, the cleaning assembly 10 incudes a bracket 11 coupled to the body 20 of the cleaner 1. Fig. 3 illustrates one side of the bracket 11 facing the surface to be cleaned. A motor 300 is mounted on one end of the bracket 11. The motor 300 includes an output shaft 310 extending along the axial direction F. A rotary pin 240 is sheathed on one end of the output shaft 310. The rotary pin 240 can rotate about the axis A with the output shaft 310. Fig. 4 illustrates a schematic view of the rotary pin 240. As shown in Fig. 4, the rotary pin 240 includes cylindrical pin shafts 242-1 and 242-2 disposed on the outer peripheral surface 241 of the cylindrical body and extending radially outwards, and the pin shafts 242-1 and 242-2 are symmetrical about the axis A. The rotary pin 240 further includes a hole for receiving the output shaft 310 of the motor 300.

Returning to Fig. 3, a flange 220 is disposed on the end surface 210 of the roller 300 of the lifting apparatus 100 away from the motor 300. In the assembled state, the roller 200 is sheathed outside of the motor 300 and coupled to the rotary pin 240. Fig. 5 is a schematic view of the roller 200. As shown therein, the roller 200 includes two flanges 220-1 and 220-2 distributed on the end surface 210 center-symmetrically about the axis A. It would be appreciated that the number of flanges described here is provided only as an example, and other numbers of flanges may be disposed on the end surface. This is not limited in the present invention.

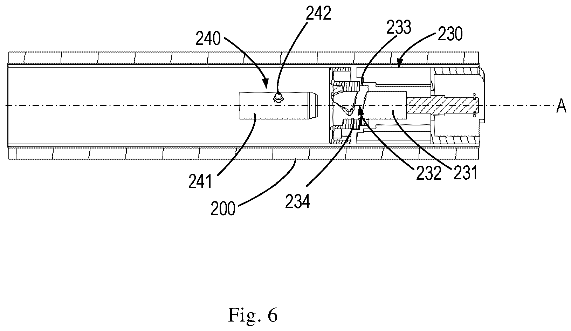

Fig. 6 is a sectional view of the roller 200 when the rotary pin 240 has not been assembled. The roller 200 includes a receiving cavity 230 for receiving the motor 300, which extends along the axial direction F. A guide slot 232 extending along a direction inclined relative to the axial direction F is opened on the inner wall 231 of the receiving cavity 230. The guide slot 232 includes a first limit part 233 at an end proximal to the end surface 210 and a second limiting part 234 at the other end proximal to the motor 300. When the rotary pin 240 is assembled in situ, the pin shaft 242 is guided to extend into the guide slot 232, and can move within the guide slot 232 relative to the roller 200 as an effect of the first or second rotation direction, which is limited by the first limiting part 232 or the second limiting part 234 so that the pin shaft 242 cannot leave the guide slot due to the effect of the first or second rotation direction.

When the roller 200 moves towards and away from the boss 21 in the axial direction F, the positions of the motor 300 and the rotary pin 240 remain unchanged. With the rotation of the output shaft along the first rotation direction R1 or second rotation direction R2, the rotary pin 240 drives the pin shaft 242 to rotate. When the pin shaft 242 rotates between the first limit part 233 and the second limit part 234 within the guide slot 232, the pin shaft 242 and the guide slot 232 move relative to each other in the axial direction F, and the relative movement of the pins shaft 242 and the guide slot 232 will be converted into axial movement of the roller 200 in the axial direction F since the position of the pin shaft 242 in the axial direction F is relatively fixed. When the pin shaft 242 moves to the limit part, if still rotating along the same direction, the pin shaft 242 drives the roller 200 to rotate.

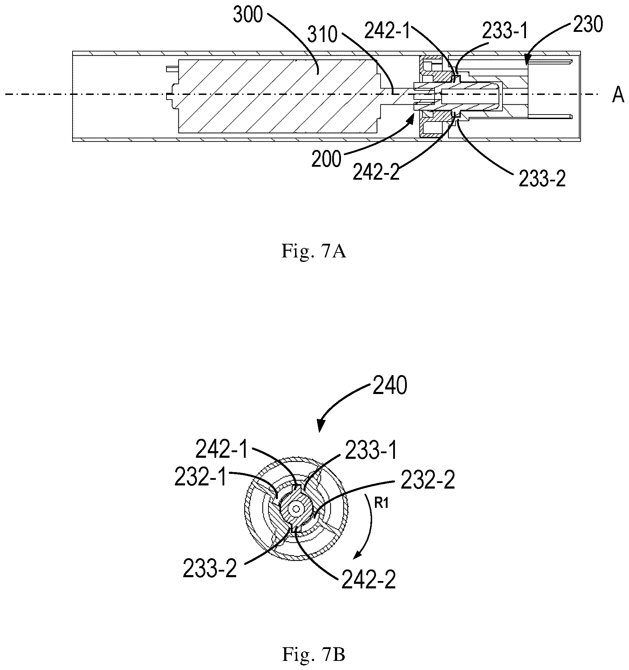

Fig. 7A is an axial sectional view when the rotary pin 240 is located at the first limit part 233. When the roller 200 is located at the operating position as shown in Fig. 2A, the pin shaft 242 of the rotary pin 240 is located at an end of the guide slot 232 away from the motor 300 and abuts against the first limit part 233. As shown in Fig. 7A, the rotary pin 240 includes two pin shafts 242-1 and 242-2 (the pin shaft 242-1 and the pin shaft 242-2 are collectively referred to as pin shaft 242). The pin shaft 242-1 abuts against a first limit part 233-1, and the pin shaft 242-2 abuts against a first limit part 233-2 (the first limit part 233-1 and the first limit part 233-2 are collectively referred to as first limit part 233). Fig. 7B is a radial sectional view when the rotary pin 240 is located at the first limit part 233. As shown in Fig. 7B, the pin shaft 242-1 and the pin shaft 242-2 abut against the first limit part 233-1 and the first limit part 233-2, respectively. Therefore, when the rotary pin 240 rotates with the output shaft 310 along the second rotation direction R2, the pin shaft 2422 pushes the roller 200 to rotate along the second rotation direction R2 to perform a cleaning operation for a surface to be cleaned. As would be appreciated, the second rotation direction R2 is a rotation direction of the roller 200 when the cleaner 1 is cleaning a surface; in the circumstance, the roller 200 rotates at the fixed position, and the roller flange 220 and the boss 21 are spaced apart a certain distance in the axial direction F.

When it is required to switch the cleaner 1 to the operating mode, the motor 300 is converted from the rotation along the second rotation direction R2 to the rotation along the first rotation direction R1, i.e., it rotates reversely. At this time, the pin shaft 242 is also converted to rotate along the first rotation direction R1, and as the action of the guide slot 232 disposed obliquely, the pin shaft 242 does not abut against the first limit part 233 but moves within the guide slot 232, with the rotation along the first rotation direction R1, to the second limit part 234 at most. It would be appreciated that the force that is applied by the pin shaft 242 to the inclined surface of the guide slot 232 during movement pushes the roller 200 to move along the axial direction F towards the boss 21. When the pin shaft 242 moves to the second limit part 234, the roller 200 moves a preset distance to the boss 21, so that the flange 220 abuts against the boss surface 22. It would be appreciated that, at a certain stage of the process where the pin shaft 242 moves from the first limit part 233 to the second limit part 234, the flange 220 can abut against the boss surface 22, and this is provided here only for illustrating the principle, without limitation.

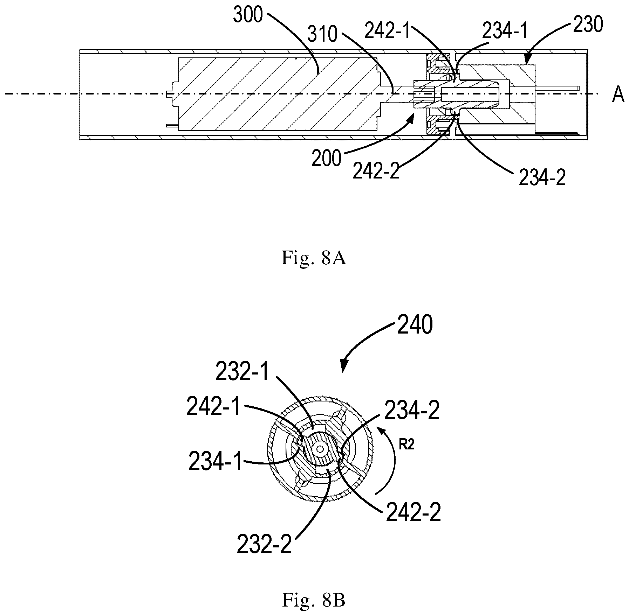

Fig. 8A is an axial sectional view when the rotary pin 240 is located at the second limit part 234, where the pin shaft 242 of the rotary pin 240 is located at an end of the guide slot 232 away from the flange 220 and abuts against the second limit part 234. As shown therein, the pin shaft 242-1 abuts against the second limit part 234-1, and the pin shaft 242-2 abuts against the second limit part 234-2. Fig. 8B is a radial sectional view when the rotary pin 240 is located at the second limit part 233. As shown therein, the pin shaft 242-1 and the pin shaft 242-2 abut against the second limit part 234-1 and the second limit part 234-2 in the first rotation direction R1, respectively. Therefore, when the rotary pin 240 rotates with the output shaft 310 along the first rotation direction R1, the pin shaft 242 pushes the roller 200 to rotate along the first rotation direction R1, so that the outer peripheral surface of the flange 220 rolls on the boss surface 22, to drive the roller 200 to move upwards to the receiving position.

Fig. 9 is a schematic view of the flange 220. Identical to the embodiment as shown in Fig. 5, the roller 200 includes two flanges 220-1 and 220-2 distributed on the end side surface 210 center-symmetrically relative to the axis A. The flanges 220-1 and 220-2 are substantially arc-shaped, namely two segments of a ring extending about the axis A. The flange 220-1 includes a contact surface 221-1 and a guide surface 222-1, and the flange 220-2 includes a contact surface 221-2 and a guide surface 222-2. The contact surfaces 221-1 and 221-2 are parallel to the roller end surface 210. Accordingly, it would be appreciated that the flange 220 protruding and disposed at the end surface 210 includes a step portion that protrudes a certain height and is substantially perpendicular to the end side surface 210, and the step portion is located on one side proximal to the contact surface. The guide surface 222-1 is gradually inclined from the contact surface 221-1 along the second rotation direction R2 and extends to the end surface 210, and the guide surface 222-2 is gradually inclined from the contact surface 221-2 along the second rotation direction R2 and extends to the end surface 210.

The contact surfaces 221-1, 221-2 and guide surfaces 222-1, 222-2 are all arc-shaped. In addition, the widths of the guide surfaces 221-1, 221-2 in the radial direction are tapered from the contact surfaces 221-1, 221-2 to the side end surface 210. The widths of the end portions of the contact surfaces 221-1, 221-2 away from the guide surfaces 222-1, 222-2 are tapered along the first rotation direction R1. Such shape design is beneficial to the interaction between the flange 220 and boss 21. For example, when the roller 200 rotates along the first rotation direction R1 and moves closer to the boss 21, there are two situations. In the first situation, the boss 21 is just located on the end surface 210 between the flange 220-1 and the flange 220-2. Since the widths of the end portions of the contact surface 221-1, 221-2 are tapered along the first rotation direction R1 (i.e., gradually narrowed a distance in an inner diameter direction) so that, when contacting the step portion of the flange 220, the surface of the boss 21 directly comes into contact with the outer peripheral surfaces of the contact surfaces 221-1, 221-2, rather than being in contact with the edge of the outer peripheral surface, which more probably causes the flange 220 to roll onto the boss 21. It would be appreciated that, when the roller 200 moves closer to the boss 21 to cause the boss 21 to locate between the two flanges, the surface of the boss 21 comes into contact with the step portion of the flange 220 as the roller 200 continues to rotate along the first rotation direction R1. The following is the same as the first situation. In the second situation, when the roller 200 moves closer to the boss 21, the contact surface 221 of the flange 220 contacts the end surface of the boss 21, and the end surface of the boss 21 slides along the contact surface 221 to the guide surface 222, then slides to a gap between two flanges under the guidance of the inclined guide surface 222, and finally comes into contact with the next flange 220, thereby lifting it up.

Fig. 10A is a schematic view when the end surface of the flange 220 abuts against the end surface of the boss 21. As shown therein, when the roller 200 moves towards the boss 21, the contact surface 221-1 of the flange 220-1 abuts against the end surface of the boss 21, and the roller 200 continues to rotate along the first rotation direction R1, so that the contact surface 221-1 continues to slide when abutting against the end surface of the boss 21, and transitions to the guide surface 222-1 of the flange 220-1 and abuts against the end surface of the boss 21 to slide. Guided by the inclined guide surface 222-1, the roller 200 continues to move towards the boss 21, to cause the end surface of the boss 21 to abut against the end surface 210 of the roller 200.

Fig. 10B is a schematic view when the flange 220-2 just abuts against the boss surface 22 of the boss 21. As shown therein, the front end of the flange 220-2, namely the step portion, abuts against the boss surface 22. At this time, the distance of the center of the roller 200 away from the boss surface 22 is less than the radius of the outer peripheral surface of the flange 220. The roller 200 continues to rotate along the first rotation direction R1, to cause the outer peripheral surface of the flange 220-2 to roll on the boss surface 22.

Fig. 10C is a schematic view when the roller 200 is lifted to the receiving position. As shown therein, after the outer peripheral surface of the flange 220-2 rolls on boss surface 22, the distance of the center of the roller 200 away from the boss surface 22 is equal to the radius of the outer peripheral surface of the flange 220. At this time, the roller 200 is located at the position distant furthest away from the boss surface 22, and stops rotating. For example, when the roller 200 is lifted to the receiving position, the position sensor 25 sends a position signal of the roller 200 to the controller of the motor 300, causing the controller to control the motor 300 to stop rotation.

Correspondingly, when the cleaner 1 is switched to the operating mode again, the motor 300 rotates along the second rotation direction R2. According to the work principle described in the embodiment as depicted in Fig. 6, upon the action of the rotary pin 240, the roller 200 at the receiving position moves along a direction away from the boss 21 in the axial direction F, so that the flange 220 slides therewith on the boss surface 22 along the direction away from the boss 21, and eventually slides off the boss surface 22. After the flange 220 slides off, the roller 200 falls back to the operating position as an effect of the gravity, to perform the cleaning operation.

Fig. 11 is a schematic view of the roller 200 according to some embodiments of the present invention. In those embodiments, the flange 220 and the end side surface 210 are not integral with the body 270 of the roller 200, but coupled to the body 270 via a transmission part 250 (not shown in detail). The transmission part 250 extends along the axial direction F from the end side surface 210 to the interior of the body 270, and is coupled to the body 270 via a one-way bearing 260 (not shown in detail). Hereinafter, reference will be made to Fig. 12 to describe the structure of the roller 200.

Fig. 12 is a schematic sectional view of the roller in Fig. 11. As shown therein, the motor 300 is fixed at one end onto the bracket 11, and includes at the other end an outer shaft 310 extending along the axis A. The roller 200 includes a cylindrical body 270 extending along the axis A. The body 270 is fixedly connected to the output shaft 310 and can thus rotate along the first rotation direction R1 and second rotation direction as driven by the output shaft 310. The body 270 at an end away from the bracket 11 along the axis A includes an end side surface 210. On the end side surface 210 is disposed a flange 220.

In addition, the roller 200 further includes a transmission part 250. The transmission part 250 extends along the axis A from the end side surface 210 to the interior of the body 270 of the roller 200. Within the body 270, the transmission part 250 is connected to the inner wall of the body 270 via the one-way bearing 260. Specifically, the transmission part 250 is coupled to the inner ring of the one-way bearing 260, and the body 270 is coupled to the outer ring of the one-way bearing 260. The inner ring and the outer ring are locked to each other when the roller 200 rotates along the first rotation direction R1, and slide relative to each other when the roller 200 rotates along the second rotation direction R2. As such, the flange 220 rotates with the roller 200 when the roller 200 rotates along the first rotation direction R1, and is stationary relative to the boss 21 when the roller 200 rotates along the second rotation direction R2.

Returning to Fig. 11, only one flange 220 is disposed on the end side surface 210 of the roller 200. The flange 220 in the embodiment is identical to the flange 210 in Fig. 9 (e.g. a structural contact surface 221 and a guide surface 222) and have the same function. As discussed above, the flange 220 can rotate with the roller 200 along the first rotation direction R1 when the roller 200 rotates along the first rotation direction R1. Accordingly, the flange 220 as shown in Fig. 11 can implement the movement process as shown in Figs. 10A through 10C, i.e., by abutting against the boss surface and rolling on the boss surface 22, the flange 220 drives the whole cleaning assembly 10 to move towards the receiving position. Once the cleaning assembly 10 reaches the receiving position, the motor 300 stops driving the roller 200, to retain the cleaning assembly 10 at the receiving position.

Different than that in the previous embodiments, the flange 220 cannot be driven to rotate along the second rotation direction R2 since the one-way bearing 270 is provided. Therefore, when the cleaning assembly 10 needs to move from the receiving position to the operating position, the roller 200 is driven to rotate along the first rotation direction R1. At this time, the flange 220 continues to roll on the boss surface 22. Having rolled over the outer peripheral surface of the flange, the cleaning assembly 10 falls back to the operating position. Moreover, since the flange 220 does not rotate with the roller 200 when the roller 200 rotates along the second rotation direction R2 (i.e., the flange is stationary relative to the boss 21). Therefore, when the roller 200 rotates along the second rotation direction R2, the flange 220 does not drive the cleaning assembly 10 to move, thus not affecting the operation performed when the roller 200 rotates along the second rotation direction R2. As such, the mechanism for moving the roller 200 in the axial direction F is not required in the roller 200 as shown in Fig. 11, and the flange 220 is always kept to abut against the boss 21 disposed on the body; when the cleaner 1 is cleaning a surface, a roller 200 rotates along the second rotation direction R2; when required to lift the cleaning assembly including the roller brush 200, the cleaner 1 is switched from the second rotation direction R2 to the first rotation direction R1. It would be appreciated that the first rotation direction R1 is related to the second rotation direction R2, switch control is performed by the controller of the cleaner 1.

## Claims

1. A lifting apparatus (100) for a cleaning assembly (10) adapted to be mounted in the cleaning assembly (10), comprising:
a motor (300) comprising an output shaft (310);
a roller (200) coupled to the output shaft (310) and configured, with rotation of the output shaft (310), to rotate about an axis (A) of the output shaft (310) along a first rotation direction (R1) or a second rotation direction (R2), the first rotation direction (R1) being opposite to the second rotation direction (R2);
**characterized by** further comprising:
a boss (21) fixedly disposed on an end on a side adjacent to the roller (200) and away from the output shaft (310), and configured to lift the roller (200) when the roller (200) rotates along the first rotation direction (R1).

2. The lifting apparatus (100) of claim 1, **characterized in that** the roller (200) comprises:
a side end surface (210) located at the end;
a flange (220) disposed on the side end surface (210) and configured to abut against a boss surface (22) of the boss (21) when the roller (200) rotates along the first rotation direction (R1).

3. The lifting apparatus (100) of claim 2, **characterized in that** the flange (220) is configured to be spaced apart from or in direct contact with the boss (21) in an axial direction (F) parallel to the axis (A) when the roller (200) rotates along the second rotation direction (R2) at an operating position of the cleaning assembly (10).

4. The lifting apparatus (100) of claim 3, **characterized in that** the flange (220) is further configured to move towards the boss (21) along the axial direction (F) when the roller (200) rotates along the first rotation direction (R1) at the operating position spaced apart from the boss (21), to abut against the boss surface (22), and move away from the boss (21) along the axial direction (F) when the roller (200) rotates along the second rotation direction (R2) at a receiving position of the cleaning assembly (10).

5. The lifting apparatus (100) of claim 2, **characterized in that** an end surface of the flange (220) facing the boss (110) comprises a contact surface (221) and a guide surface (222), the contact surface (221) being parallel to the side end surface (210) and the guide surface (222) extending from the contact surface (221) to the side end surface (210) along the second rotation direction (R2).

6. The lifting apparatus (100) of claim 5, **characterized in that** the contact surface (221) and the guide surface (222) are arc-shaped about the axis (A), a width of the guide surface (222) in a radial direction is tapered from the contact surface (221) to the side end surface (210), and a width of an end portion of the contact surface (221) away from the guide surface (222) in the radial direction is tapered along the first rotation direction (R1).

7. The lifting apparatus (100) of claim 5, **characterized in that** a plurality of flanges (220) are disposed on the side end surface (210), the plurality of flanges (220) being equidistant in the first rotation direction (R1).

8. The lifting apparatus (100) of claim 1, **characterized in that** the roller (200) comprises a receiving cavity (230) extending along an axial direction (F) parallel to the axis (A), the motor (300) being disposed in the receiving cavity (230).

9. The lifting apparatus (100) of claim 8, **characterized in that** a guide slot (232) is opened on an inner wall (231) of the receiving cavity (230), the guide slot (232) extending along a direction inclined relative to the axial direction (F) and comprising a first limit part (233) at an end of the guide slot (232) and a second limit part (234) at the other end, and
wherein the receiving cavity (230) receives therein a rotary pin (240) coupled to the output shaft (310), the rotary pin (240) comprises a pin shaft (242) disposed on an outer peripheral surface (241) thereof, the rotary shaft (242) extending into the guide slot (232) and configured to move in the guide slot (232).

10. The lifting apparatus (100) of claim 2, **characterized in that** the flange (220) is further configured to rotate with the roller (200) when the roller (200) rotates along the first rotation direction (R1), and directly contact the boss (21) and remain stationary when the roller (200) rotates along the second rotation direction (R2).

11. The lifting apparatus (100) of claim 10, **characterized in that** the roller (200) further comprises:
a transmission part (250) extending from the side end surface (210) to an interior of the roller (200) along an axial direction (F) parallel to the axis (A); and
a one-way bearing (260) comprising an inner ring and an outer ring, the inner ring fixedly coupled to an outer periphery of the transmission part (250), the outer ring fixedly coupled to the roller (200), the inner ring and the outer ring configured to lock each other when the roller (200) rotates along the first rotation direction (R1), and to slide relative to each other when the roller (200) rotates along the second rotation direction (R2).

12. The lifting apparatus (100) of claim 1, **characterized in that** the motor (300) is configured to stop rotating in response to determining the roller (200) moves to the receiving position of the cleaning assembly (10).

13. The lifting apparatus (100) of any one of claims 1-12, **characterized in that** the roller (200) cleans a surface to be cleaned, a speed of rotation along the second rotation direction (R2) being greater than a speed of rotation along the first rotation speed (R1).

14. A cleaning assembly (10) adapted to be mounted on a body (20) of a cleaner (1) and configured to move between an operating position of abutting against a surface to be cleaned relative to the body (20) and a receiving position away from the surface to be cleaned, **characterized in that** the cleaning assembly (10) comprises the lifting apparatus of any one of claims 1-13.

15. A cleaner (1) adapted to operate on a surface to be cleaned, **characterized by** comprising:
a body (20) comprising a boss (21); and
the cleaning assembly (10) of claim 14 adapted to be mounted on the body (20) so that a side end surface (210) of a lifting apparatus (100) of the cleaning assembly (10) is adjacent to the boss (21).

## Patentansprüche

1. Hebeeinrichtung (100) für eine Reinigungsanordnung (10), welche zur Montage in der Reinigungsanordnung (10) adaptiert ist, umfassend:
einen Motor (300), welcher eine Abtriebswelle (310) umfasst;
eine Rolle (200), welche mit der Abtriebswelle (310) gekoppelt und dazu konfiguriert ist, sich bei Drehung der Abtriebswelle (310) um eine Achse (A) der Abtriebswelle (310) entlang einer ersten Drehrichtung (R1) oder einer zweiten Drehrichtung (R2) zu drehen, wobei die erste Drehrichtung (R1) der zweiten Drehrichtung (R2) entgegengesetzt ist;
**dadurch gekennzeichnet, dass** sie weiter umfasst:
eine Nabe (21), welche an einem Ende auf einer Seite neben der Rolle (200) und weg von der Abtriebswelle (310) ortsfest angeordnet und dazu konfiguriert ist, die Rolle (200) anzuheben, wenn sich die Rolle (200) entlang der ersten Drehrichtung (R1) dreht.

2. Hebeeinrichtung (100) nach Anspruch 1, **dadurch gekennzeichnet, dass** die Rolle (200) umfasst:
eine seitliche Endfläche (210), welche sich an dem Ende befindet;
einen Flansch (220), welcher an der seitlichen Endfläche (210) angeordnet und so konfiguriert ist, dass er an einer Nabenfläche (22) der Nabe (21) anliegt, wenn sich die Rolle (200) entlang der ersten Drehrichtung (R1) dreht.

3. Hebeeinrichtung (100) nach Anspruch 2, **dadurch gekennzeichnet, dass** der Flansch (220) so konfiguriert ist, dass er in einer axialen Richtung (F), welche parallel zu der Achse (A) verläuft, von der Nabe (21) beabstandet ist oder mit dieser in direktem Kontakt steht, wenn sich die Rolle (200) in einer Betriebsposition der Reinigungsanordnung (10) entlang der zweiten Drehrichtung (R2) dreht.

4. Hebeeinrichtung (100) nach Anspruch 3, **dadurch gekennzeichnet, dass** der Flansch (220) weiter so konfiguriert ist, dass er sich entlang der axialen Richtung (F) auf die Nabe (21) zu bewegt, wenn sich die Rolle (200) in der von der Nabe (21) beabstandeten Betriebsposition entlang der ersten Drehrichtung (R1) dreht, um an der Nabenfläche (22) anzuliegen, und sich entlang der axialen Richtung (F) weg von der Nabe (21) zu bewegen, wenn sich die Rolle (200) in einer Aufnahmeposition der Reinigungsanordnung (10) entlang der zweiten Drehrichtung (R2) dreht.

5. Hebeeinrichtung (100) nach Anspruch 2, **dadurch gekennzeichnet, dass** eine der Nabe (110) zugewandte Endfläche des Flansches (220) eine Kontaktfläche (221) und eine Führungsfläche (222) umfasst, wobei die Kontaktfläche (221) parallel zu der seitlichen Endfläche (210) ist und die Führungsfläche (222) sich von der Kontaktfläche (221) zu der seitlichen Endfläche (210) entlang der zweiten Drehrichtung (R2) erstreckt.

6. Hebeeinrichtung (100) nach Anspruch 5, **dadurch gekennzeichnet, dass** die Kontaktfläche (221) und die Führungsfläche (222) bogenförmig um die Achse (A) herum verlaufen, eine Breite der Führungsfläche (222) in radialer Richtung von der Kontaktfläche (221) zu der seitlichen Endfläche (210) hin verjüngt ist und eine Breite eines Endabschnitts der Kontaktfläche (221) weg von der Führungsfläche (222) in radialer Richtung entlang der ersten Drehrichtung (R1) verjüngt ist.

7. Hebeeinrichtung (100) nach Anspruch 5, **dadurch gekennzeichnet, dass** an der seitlichen Endfläche (210) eine Vielzahl von Flanschen (220) angeordnet sind, wobei die Vielzahl von Flanschen (220) in der ersten Drehrichtung (R1) den gleichen Abstand voneinander haben.

8. Hebeeinrichtung (100) nach Anspruch 1, **dadurch gekennzeichnet, dass** die Rolle (200) einen Aufnahmehohlraum (230) umfasst, welcher sich entlang einer axialen Richtung (F) parallel zu der Achse (A) erstreckt, wobei der Motor (300) in dem Aufnahmehohlraum (230) angeordnet ist.

9. Hebeeinrichtung (100) nach Anspruch 8, **dadurch gekennzeichnet, dass** sich an einer Innenwand (231) des Aufnahmehohlraums (230) ein Führungsschlitz (232) öffnet, wobei sich der Führungsschlitz (232) entlang einer relativ zu der axialen Richtung (F) geneigten Richtung erstreckt und einen ersten Begrenzungsteil (233) an einem Ende des Führungsschlitzes (232) und einen zweiten Begrenzungsteil (234) an dem anderen Ende umfasst, und
wobei der Aufnahmehohlraum (230) einen Drehstift (240) darin aufnimmt, welcher mit der Abtriebswelle (310) gekoppelt ist, der Drehstift (240) eine Stiftwelle (242) umfasst, welche an einer äußeren Umfangsfläche (241) davon angeordnet ist, die Drehwelle (242) sich in den Führungsschlitz (232) hinein erstreckt und so konfiguriert ist, dass sie sich in dem Führungsschlitz (232) bewegt.

10. Hebeeinrichtung (100) nach Anspruch 2, **dadurch gekennzeichnet, dass** der Flansch (220) weiter so konfiguriert ist, dass er sich mit der Rolle (200) dreht, wenn sich die Rolle (200) entlang der ersten Drehrichtung (R1) dreht, und direkt mit der Nabe (21) in Kontakt steht und ortsfest bleibt, wenn sich die Rolle (200) entlang der zweiten Drehrichtung (R2) dreht.

11. Hebeeinrichtung (100) nach Anspruch 10, **dadurch gekennzeichnet, dass** die Rolle (200) weiter umfasst:
ein Übertragungsteil (250), welches sich von der seitlichen Endfläche (210) in ein Inneres der Rolle (200) entlang einer axialen Richtung (F) parallel zu der Achse (A) erstreckt; und
ein Einweglager (260), welches einen Innenring und einen Außenring umfasst, wobei der Innenring ortsfest mit einem Außenumfang des Übertragungsteils (250) gekoppelt ist, der Außenring ortsfest mit der Rolle (200) gekoppelt ist, wobei der Innenring und der Außenring so konfiguriert sind, dass sie sich gegenseitig verriegeln, wenn sich die Rolle (200) entlang der ersten Drehrichtung (R1) dreht, und relativ zueinander gleiten, wenn sich die Rolle (200) entlang der zweiten Drehrichtung (R2) dreht.

12. Hebeeinrichtung (100) nach Anspruch 1, **dadurch gekennzeichnet, dass** der Motor (300) so konfiguriert ist, dass er seine Drehung stoppt, wenn festgestellt wird, dass sich die Rolle (200) in die Aufnahmeposition der Reinigungsanordnung (10) bewegt.

13. Hebeeinrichtung (100) nach einem der Ansprüche 1-12, **dadurch gekennzeichnet, dass** die Rolle (200) eine zu reinigende Fläche reinigt, wobei eine Drehgeschwindigkeit entlang der zweiten Drehrichtung (R2) größer ist als eine Drehgeschwindigkeit entlang der ersten Drehrichtung (R1).

14. Reinigungsanordnung (10), welche zur Montage an einem Körper (20) eines Reinigers (1) adaptiert ist und welche so konfiguriert ist, dass sie sich zwischen einer Betriebsposition, in der sie relativ zu dem Körper (20) an einer zu reinigenden Fläche anliegt, und einer Aufnahmeposition weg von der zu reinigenden Fläche bewegt, **dadurch gekennzeichnet, dass** die Reinigungsanordnung (10) die Hebeeinrichtung nach einem der Ansprüche 1-13 umfasst.

15. Reiniger (1), welcher zum Betrieb auf einer zu reinigenden Fläche adaptiert ist, **dadurch gekennzeichnet, dass** er umfasst:
einen Körper (20), welcher eine Nabe (21) umfasst; und
die Reinigungsanordnung (10) nach Anspruch 14, welche zur Montage an dem Körper (20) adaptiert ist, sodass eine seitliche Endfläche (210) einer Hebeeinrichtung (100) der Reinigungsanordnung (10) neben der Nabe (21) liegt.

## Revendications

1. Appareil de levage (100) pour un ensemble de nettoyage (10) adapté pour être monté dans l'ensemble de nettoyage (10), comprenant :
un moteur (300) comprenant un arbre de sortie (310) ;
un rouleau (200) couplé à l'arbre de sortie (310) et configuré, avec la rotation de l'arbre de sortie (310), pour tourner autour d'un axe (A) de l'arbre de sortie (310) le long d'une première direction de rotation (R1) ou d'une seconde direction de rotation (R2), la première direction de rotation (R1) étant opposée à la seconde direction de rotation (R2) ;
**caractérisé en ce qu'**il comprend en outre :
un bossage (21) disposé à demeure sur une extrémité sur un côté adjacent au rouleau (200) et éloigné de l'arbre de sortie (310), et configuré pour soulever le rouleau (200) lorsque le rouleau (200) tourne le long de la première direction de rotation (R1).

2. Appareil de levage (100) selon la revendication 1, **caractérisé en ce que** le rouleau (200) comprend :
une surface d'extrémité latérale (210) située à l'extrémité ;
une bride (220) disposée sur la surface d'extrémité latérale (210) et configurée pour venir en butée contre une surface de bossage (22) du bossage (21) lorsque le rouleau (200) tourne le long de la première direction de rotation (R1).

3. Appareil de levage (100) selon la revendication 2, **caractérisé en ce que** la bride (220) est configurée pour être espacée du bossage (21) ou être en contact direct avec celui-ci dans une direction axiale (F) parallèle à l'axe (A) lorsque le rouleau (200) tourne le long de la seconde direction de rotation (R2) dans une position de fonctionnement de l'ensemble de nettoyage (10).

4. Appareil de levage (100) selon la revendication 3, **caractérisé en ce que** la bride (220) est en outre configurée pour se déplacer vers le bossage (21) le long de la direction axiale (F) lorsque le rouleau (200) tourne le long de la première direction de rotation (R1) à la position de fonctionnement espacée du bossage (21), pour venir en butée contre la surface de bossage (22), et s'éloigner du bossage (21) le long de la direction axiale (F) lorsque le rouleau (200) tourne le long de la seconde direction de rotation (R2) dans une position de réception de l'ensemble de nettoyage (10).

5. Appareil de levage (100) selon la revendication 2, **caractérisé en ce qu'**une surface d'extrémité de la bride (220) faisant face au bossage (110) comprend une surface de contact (221) et une surface de guidage (222), la surface de contact (221) étant parallèle à la surface d'extrémité latérale (210) et la surface de guidage (222) s'étendant depuis la surface de contact (221) jusqu'à la surface d'extrémité latérale (210) le long de la seconde direction de rotation (R2).

6. Appareil de levage (100) selon la revendication 5, **caractérisé en ce que** la surface de contact (221) et la surface de guidage (222) sont en forme d'arc autour de l'axe (A), une largeur de la surface de guidage (222) dans une direction radiale est effilée depuis la surface de contact (221) jusqu'à la surface d'extrémité latérale (210), et une largeur d'une partie d'extrémité de la surface de contact (221) éloignée de la surface de guidage (222) dans la direction radiale est effilée le long de la première direction de rotation (R1).

7. Appareil de levage (100) selon la revendication 5, **caractérisé en ce qu'**une pluralité de brides (220) sont disposées sur la surface d'extrémité latérale (210), la pluralité de brides (220) étant équidistantes dans la première direction de rotation (R1).

8. Appareil de levage (100) selon la revendication 1, **caractérisé en ce que** le rouleau (200) comprend une cavité de réception (230) s'étendant le long d'une direction axiale (F) parallèle à l'axe (A), le moteur (300) étant disposé dans la cavité de réception (230).

9. Appareil de levage (100) selon la revendication 8, **caractérisé en ce qu'**une fente de guidage (232) est ouverte sur une paroi interne (231) de la cavité de réception (230), la fente de guidage (232) s'étendant le long d'une direction inclinée par rapport à la direction axiale (F) et comprenant une première partie de limite (233) à une extrémité de la fente de guidage (232) et une seconde partie de limite (234) à l'autre extrémité, et
dans lequel la cavité de réception (230) reçoit en son sein une broche rotative (240) couplée à l'arbre de sortie (310), la broche rotative (240) comprend un arbre de broche (242) disposé sur une surface périphérique externe (241) de celle-ci, l'arbre rotatif (242) s'étendant dans la fente de guidage (232) et étant configuré pour se déplacer dans la fente de guidage (232).

10. Appareil de levage (100) selon la revendication 2, **caractérisé en ce que** la bride (220) est en outre configurée pour tourner avec le rouleau (200) lorsque le rouleau (200) tourne le long de la première direction de rotation (R1), et entrer directement en contact avec le bossage (21) et rester immobile lorsque le rouleau (200) tourne le long de la seconde direction de rotation (R2).

11. Appareil de levage (100) selon la revendication 10, **caractérisé en ce que** le rouleau (200) comprend en outre :
une partie de transmission (250) s'étendant depuis la surface d'extrémité latérale (210) jusqu'à un intérieur du rouleau (200) le long d'une direction axiale (F) parallèle à l'axe (A) ; et
un roulement unidirectionnel (260) comprenant une bague interne et une bague externe, la bague interne étant couplée à demeure à une périphérie externe de la partie de transmission (250), la bague externe étant couplée à demeure au rouleau (200), la bague interne et la bague externe étant configurées pour se verrouiller l'une l'autre lorsque le rouleau (200) tourne le long de la première direction de rotation (R1), et pour coulisser l'une par rapport à l'autre lorsque le rouleau (200) tourne le long de la seconde direction de rotation (R2).

12. Appareil de levage (100) selon la revendication 1, **caractérisé en ce que** le moteur (300) est configuré pour arrêter de tourner à la suite de la détermination que le rouleau (200) se déplace vers la position de réception de l'ensemble de nettoyage (10).

13. Appareil de levage (100) selon l'une quelconque des revendications 1-12, **caractérisé en ce que** le rouleau (200) nettoie une surface à nettoyer, une vitesse de rotation le long de la seconde direction de rotation (R2) étant supérieure à une vitesse de rotation le long de la première direction de rotation (R1).

14. Ensemble de nettoyage (10) adapté pour être monté sur un corps (20) d'un nettoyeur (1) et configuré pour se déplacer entre une position de fonctionnement en butée contre une surface à nettoyer par rapport au corps (20) et une position de réception éloignée de la surface à nettoyer, **caractérisé en ce que** l'ensemble de nettoyage (10) comprend l'appareil de levage selon l'une quelconque des revendications 1-13.

15. Nettoyeur (1) adapté pour fonctionner sur une surface à nettoyer, **caractérisé en ce qu'**il comprend :
un corps (20) comprenant un bossage (21) ; et
l'ensemble de nettoyage (10) selon la revendication 14 étant adapté pour être monté sur le corps (20) de telle sorte qu'une surface d'extrémité latérale (210) d'un appareil de levage (100) de l'ensemble de nettoyage (10) soit adjacente au bossage (21).
